# EUROPEAN PATENT APPLICATION

(11) **EP 4 407 420 A1**
(43) Date of publication of application: **31.07.2024**
(21) Application number: 22872174.2
(22) Date of filing: 26.09.2022
(51) Int. Cl.: G06F 3/0481, G06F 3/0488

(54) **APPLICATION ICON DISPLAY METHOD AND APPARATUS, AND ELECTRONIC DEVICE AND STORAGE MEDIUM**

(30) Priority: 26.09.2021 CN 202111131409
(71) Applicant: Vivo Mobile Communication Co., Ltd., Dongguan, Guangdong 523863 (CN)
(72) Inventor: XIAO, Jiali, Dongguan, Guangdong 523863 (CN)
(74) Representative: Lavoix
(86) International application number: PCT/CN2022/121182
(87) International publication number: WO 2023/046130

(57) **Abstract**

An application icon display method and apparatus, an electronic device and a storage medium are provided. The method includes: receiving a first input by a user; in response to the first input, displaying a target folder in a first position, canceling the display of a first icon displayed in a first area, and displaying the first icon in the target folder; where the target folder has a first attribute, the first area is determined by the first position, and the first icon includes an icon corresponding to the first attribute among icons displayed in the first area.

## Description

### CROSS-REFERENCE TO RELATED APPLICATIONS

The present invention claims priority to Chinese Patent Application No. 202111131409.3, filed with the China National Intellectual Property Administration on September 26, 2021, and entitled "APPLICATION ICON DISPLAY METHOD AND APPARATUS, ELECTRONIC DEVICE AND STORAGE MEDIUM", which is incorporated herein by reference in its entirety.

### TECHNICAL FIELD

This application belongs to the field of computer technologies, and specifically relates to an application icon display method and apparatus, an electronic device and a storage medium.

### BACKGROUND

There are often a large number of application icons in operation interfaces of electronic devices. The arrangement of these application icons is irregular, making it difficult for users to quickly find a target application icon and use the application corresponding to the target application icon.

Currently, the classification of these application icons requires users to complete it manually. However, manual arrangement of application icons has problems such as slow sorting speed and consuming user energy.

### SUMMARY

The purpose of the embodiments of the present application is to provide an application icon display method and apparatus, an electronic device and a storage medium, which can solve the problem of slow arrangement speed of application icons and consuming user energy.

According to a first aspect, embodiments of the present application provide an application icon display method. The method includes:
receiving a first input by a user; and
in response to the first input, displaying a target folder in a first position, canceling the display of a first icon displayed in a first area, and displaying the first icon in the target folder;
where the target folder has a first attribute, the first area is determined by the first position, and the first icon includes an icon corresponding to the first attribute among icons displayed in the first area.

According to a second aspect, embodiments of the present application provide an application icon display apparatus. The apparatus includes:
a first receiving module, configured to receive a first input by a user; and
a first display module, configured to: in response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area.

According to a third aspect, an embodiment of this application provides an electronic device. The electronic device includes a processor, a memory, and a program or an instruction stored in the memory and executable on the processor, where the program or the instruction is executed by the processor to implement steps of the method according to the first aspect.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip. The chip includes a processor and a communications interface, the communications interface is coupled to the processor, and the processor is configured to run a program or an instruction to implement the method according to the first aspect.

In the application icon display method and apparatus, electronic device and storage medium provided by the embodiments of the present application, the first input by the user is received; in response to the first input, a target folder is displayed in a first position, the display of a first icon displayed in a first area is canceled, and the first icon is displayed in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

### BRIEF DESCRIPTION OF DRAWINGS

FIG. 1 is a first schematic flowchart of an application icon display method according to an embodiment of the present application;
FIG. 2a is a schematic diagram of a first display interface of an application icon display method according to an embodiment of the present application;
FIG. 2b is a schematic diagram of a second display interface of an application icon display method according to an embodiment of the present application;
FIG. 3 is a second schematic flowchart of an application icon display method according to an embodiment of the present application;
FIG. 4a is a schematic diagram of a third display interface of an application icon display method according to an embodiment of the present application;
FIG. 4b is a schematic diagram of a fourth display interface of an application icon display method according to an embodiment of the present application;
FIG. 5a is a schematic diagram of a fifth display interface of an application icon display method according to an embodiment of the present application;
FIG. 5b is a schematic diagram of a sixth display interface of an application icon display method according to an embodiment of the present application;
FIG. 6a is a schematic diagram of a seventh display interface of an application icon display method according to an embodiment of the present application;
FIG. 6b is a schematic diagram of an eighth display interface of an application icon display method according to an embodiment of the present application;
FIG. 7 is a schematic diagram of a ninth display interface of an application icon display method according to an embodiment of the present application;
FIG. 8 is a schematic diagram of module composition of an application icon display apparatus according to an embodiment of the present application;
FIG. 9 is a schematic diagram of a structure of an electronic device according to an embodiment of this application; and
FIG. 10 is a schematic diagram of a hardware structure of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, the following describes in detail the application icon display method in the embodiments of this application based on specific embodiments and application scenarios.

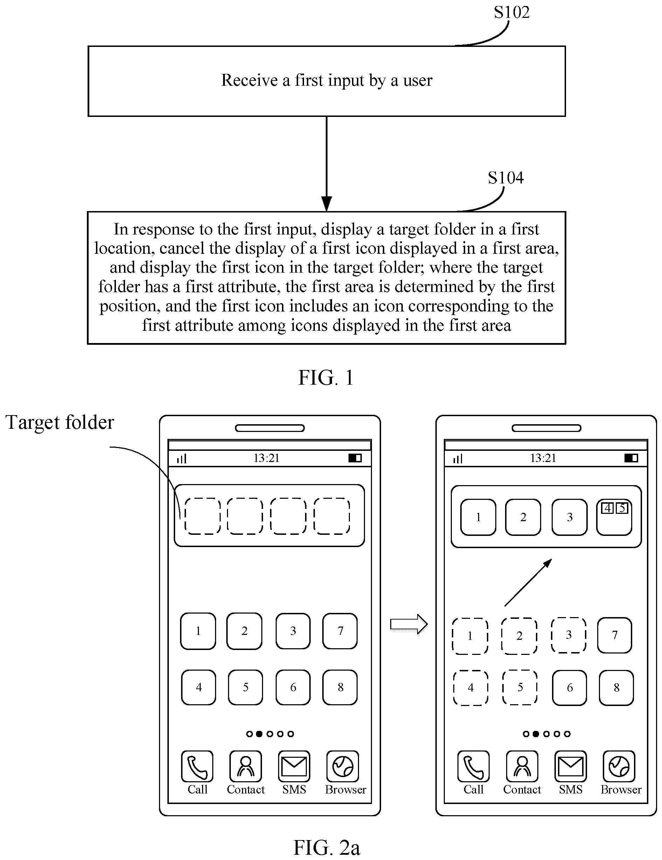

FIG. 1 is a schematic flowchart of an application icon display method according to an embodiment of the present application. As shown in FIG. 1, the process includes:

S 102. Receive a first input by a user; where the first input may include: any one of a click input on a target folder by the user, a click input on a designated control by the user, a voice command input by the user, and a specific gesture input by the user, which can be specifically determined according to actual usage requirements, and is not limited in the embodiments of this application.

It should be noted that the specific gesture in the embodiment of the present application can be any one of a single click gesture, a sliding gesture, a drag gesture, a pressure recognition gesture, a long press gesture, an area change gesture, a double press gesture, and a double click gesture. The click input in the embodiment of the present application can be a single click input, a double click input or any number of click inputs, or the like, or can be a long press input or a short press input.

S 104. In response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area.

Specifically, the first area can be a target desktop interface where the first position is located, or can be an area within a preset range near the first position, or can be a target desktop interface where the first position is located, or a previous desktop interface and a latter desktop interface of the target desktop interface, which can be specifically set according to actual needs, and is not limited in the embodiments of this application.

Specifically, the attribute information of the target folder may include at least one of: application icon color, application type, usage time greater than a preset threshold, whether the focus mode is turned on, and whether to sort by usage time. For example, when the first attribute of the target folder includes that the application icon color is red, the first icon includes an icon whose color is red among the icons displayed in the first area, where the application icon color can be determined by the main color of the icon. For example, when the first attribute of the target folder includes that the application type is a social type, the first icon includes an icon corresponding to the social application type among the icons displayed in the first area. For example, the first attribute for the target folder includes that the application type is a social type and the application icon color is red, the first icon includes an icon that corresponds to the social application type and whose icon color is red among the icons displayed in the first area. That is, the user can set the attribute information of the target folder according to actual needs, so that through attribute matching, the application icon in the first area corresponding to the current attribute (that is, the first attribute) of the target folder is automatically added into the target folder.

In addition, when the first attribute of the target folder includes turning on the focus mode, the first icon includes an icon corresponding to the application program with the focus mode among the icons displayed in the first area, and the timing starts. During the timing time, application programs other than the application program corresponding to the first icon are locked. After the timing expires, the other applications are unlocked and the target folder is deleted. For example, if the focus time is 30 minutes, only icons corresponding to the four applications "Phone, Contact, SMS, Clock" with focus mode are displayed in the target folder. Within 30 minutes from the start of the timing, the applications corresponding to the icons in the target folder can be used normally, and other applications outside the target folder are locked and cannot be used. After 30 minutes from the start of the timing, display of the target folder is canceled and all applications can be used normally.

In addition, the first attribute of the target folder includes sorting by usage time. If no other attribute option is selected, the first icon includes an icon corresponding to an application program whose usage time is greater than a preset threshold among the icons displayed in the first area, and multiple sub-icons included in the first icon are displayed in the target folder in descending order of usage times, so that users can quickly view applications that are frequently used. If the first attribute also includes other attribute options, for example, the first attribute also includes that the application type is a social type, the first icon includes an icon corresponding to the social application type among the icons displayed in the first area, and multiple sub-icons included in the first icon are displayed the target folder in descending order of usage times.

The style of the target folder can be set according to actual needs, for example, 1×1, 2×2, 1×4, 2×3 and other styles. 1×1 represents the desktop icon space that the target folder needs to occupy is 1 row and 1 column, that is, the first position contains the display position of 1 desktop icon. 2×2 represents that the desktop icon space that the target folder needs to occupy is 2 rows and 2 columns, that is, the first position contains the display position of the 4 desktop icons arranged according to 2 rows and 2 columns. 2×3 indicates that the desktop icon space that the target folder needs to occupy is 2 rows and 3 columns, that is, the first position contains the display position of 6 desktop icons arranged in 2 rows and 3 columns.

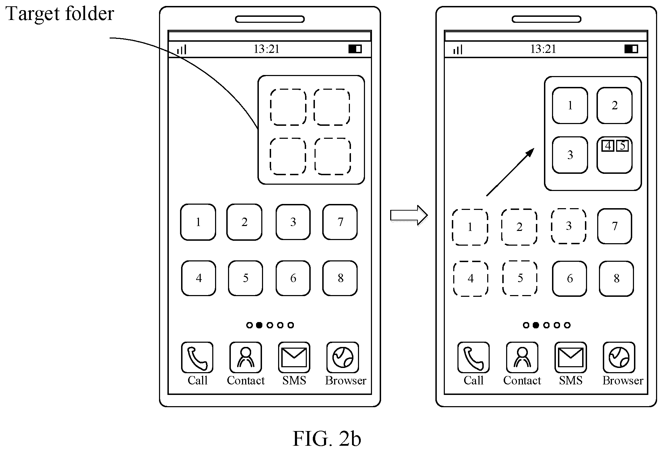

In specific implementation, as shown in FIG. 2a, taking the style of the target folder as 1×4 as an example, the first position of the target folder occupies 4 desktop icon spaces. If the first attribute includes attribute information that the application type is social application, and the first area is the target desktop interface where the first position is located, the icons of the application type of social applications 1 to 5 in the first area are added to the target folder, that is, the target folder includes icon 1 corresponding to application 1, icon 2 corresponding to application 2, icon 3 corresponding to application 3, icon 4 corresponding to application 4, and icon 5 corresponding to application 5. As shown in FIG. 2b, taking the style of the target folder as 2×2 as an example, the first position of the target folder occupies 4 desktop icon spaces. If the first attribute includes attribute information that the application type is social application, and the first area is the target desktop interface where the first position is located, icons of the application type of social applications 1 to 5 in the first area are added to the target folder, that is, the target folder includes icon 1 corresponding to application 1, icon 2 corresponding to application 2, icon 3 corresponding to application 3, icon 4 corresponding to application 4, and icon 5 corresponding to application 5; where the display order of multiple application icons in the target folder can be sorted according to a preset sorting method. The preset sorting method can be set by the user or automatically determined, for example, in descending order of usage times, or in descending order of numbers of unread messages, or an order in which the icons appear on the desktop interface.

Further, in order to improve the sorting accuracy of multiple application icons in the target folder, the icons corresponding to the application programs that the user is most likely to use are sorted in the front. Based on this, the preset sorting method corresponding to the multiple application icons in the target folder is determined based on the attribute information of the target folder. For example, if the application type contained in the target folder is a social application, icons can be sorted in descending order of the numbers of unread messages. For another example, if the attribute information of the target folder includes that the usage time is greater than a preset threshold, icons can be sorted in descending order of usage times. For another example, if the application type contained in the target folder is a video application, icons can be sorted in descending order of the numbers of video updates.

In addition, during specific implementation, the preset sorting method may also be sorting by probabilities of application programs being triggered. Specifically, based on the attribute information of the application program corresponding to each application icon in the target folder, the probability of each application being triggered is determined, and multiple application icons are displayed in the target folder in descending order of probabilities of being triggered. The probability of each application being triggered can be determined based on the user's frequency of using the application program; or determined based on the usage records of the associated applications. Specifically, it is determined in advance based on the user usage habits that a first application and a second application are usually a pair of associated applications that are used in succession, that is, the first application is an associated application of the second application. If detecting that the user has used the first application and the icon corresponding to the second application is displayed in the target folder, the probability of the second application being triggered is automatically set to the highest, that is, the corresponding icon of the second application is displayed in the first icon display position in the target folder; that is, when it is determined based on the application usage records within the preset historical time period that the user has used the first application, if the icon corresponding to the second application is not displayed in the first icon display position in the target folder, the icon corresponding to the second application will be automatically dynamically displayed in the first icon display position in the target folder, that is, after the first icon is displayed in the target folder, the display position of the first icon is dynamically adjusted based on the user usage record of the associated application, so that the user can quickly find the application program to be used in the target folder.

In the embodiments of the present application, the first input by the user is received; in response to the first input, a target folder is displayed in a first position, the display of a first icon displayed in a first area is canceled, and the first icon is displayed in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

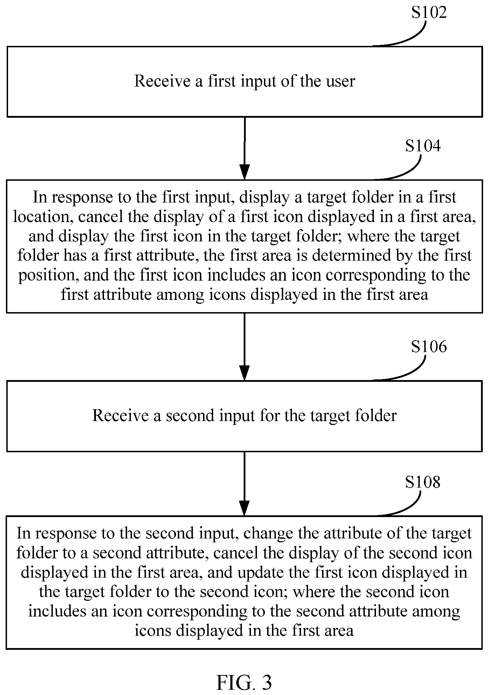

Considering that the user may need to change the attribute information after setting the attribute information for the target folder, based on this, when the user changes the attribute information of the target folder, as shown in FIG. 3, after displaying the target folder in the first position, canceling the display of the first icon displayed in the first area, and displaying the first icon in the target folder in response to the first input in S 104, the method further includes:

S106. Receive a second input for the target folder; where the second input may include: any one of a selection input for a specific option control by the user, a deselection input, a voice command input by the user, and a gaze command input by the user, which can be specifically determined according to actual usage requirements, and is not limited in the embodiments of this application.

S108. In response to the second input, change the attribute of the target folder to a second attribute, cancel the display of the second icon displayed in the first area, and update the first icon displayed in the target folder to the second icon; where the second icon includes an icon corresponding to the second attribute among icons displayed in the first area.

Specifically, after receiving the second input, the second attribute is determined based on the attribute option indicated by the second input, where the second attribute may be newly added attribute information based on the first attribute, or obtained by changing the attribute value in the first attribute or deleting a certain attribute value in the first attribute. Correspondingly, after the attribute information of the target folder changes from the first attribute to the second attribute, the application icon displayed in the target folder will also change, that is, the application icon in the first area corresponding to the current attribute (that is, the second attribute) of the target folder is automatically added into the target folder through attribute matching again, and at the same time, display of an icon in the first icon that does not match the second attribute information is canceled in the target folder.

For example, the second attribute of the target folder includes that the application icon color is blue, the second icon includes the blue icon among the icons displayed in the first area, and display of the red icon is canceled in the target folder.

In the embodiment of this application, in order to improve the flexibility of updating application icons displayed in the target folder and meet the personalized needs of users, considering that the user may need to automatically add icons of application programs with other attributes to the target folder, the user can change the attribute information of the target folder to trigger the automatic addition of the application icon corresponding to the changed attribute information to the target folder, or trigger the automatic cancellation of display of the application icon that does not match the changed attribute information in the target folder.

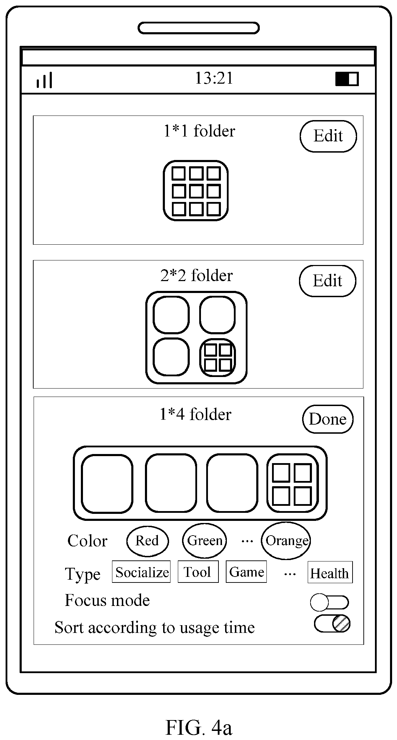

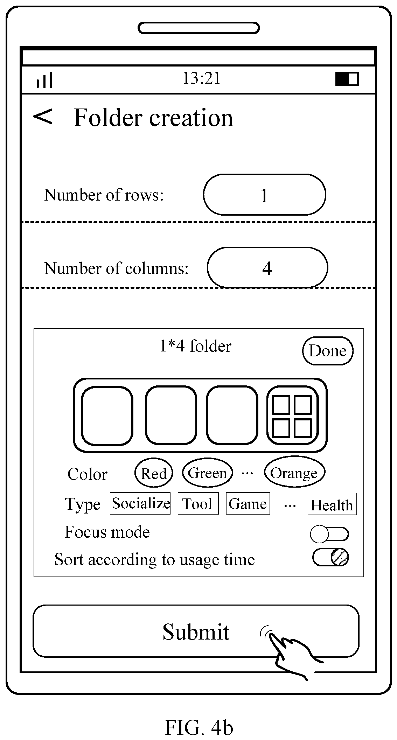

In specific implementation, for the creation process of the target folder, as shown in FIG. 4a, several alternative folder styles can be displayed on the creation interface. For example, the alternative folder styles can include 1×1, 2 ×2, and 1×4. In addition, as shown in FIG. 4b, for the creation process of the target folder, the corresponding target folder can also be generated based on the number of rows and columns input by the user; and the user can also set the attribute information of the target folder. When there is a need for change, the user can enter the editing interface and change the attribute information of the target folder.

Considering that after the target folder is displayed in a certain position, the user may need to change the position of the target folder, before the target folder is displayed in the first position, the target folder has already been displayed in the second position, and the target folder already includes the third icon in the second area corresponding to the second position. Based on this, when the user changes the position of the target folder, before receiving the first input by the user in S102, the method also includes:

The target folder is displayed in the second position, where the target folder includes a third icon; the third icon includes an icon corresponding to the attribute information of the target folder among the icons displayed in the second area, and the second area is determined by the second position.

Correspondingly, after the response to the first input in S104, the method further includes:
canceling display of the third icon.

Specifically, display of icons that do not belong to the first area are canceled in the target folder, and the application icons in the first area that correspond to the current attribute of the target folder are added into the target folder, that is, the application icons in the first area that correspond to the current attribute (that is, the first attribute) of the target folder are automatically added into the target folder through position change. In addition, during specific implementation, the user can also choose whether to cancel the display of the added third icon during the position change process of the target folder. For example, when the user wants to add all the application icons of different desktop interfaces into the target folder, the user can choose not to cancel the display of the added third icon during the position change process of the target folder, and instead continue to add the icon corresponding to the new position of the target folder to the target folder, so that application icons in multiple desktop interfaces corresponding to the current attribute of the target folder are all added to the target folder.

In this embodiment of the present application, in order to further improve the update flexibility of application icons displayed in the target folder and further meet the personalized needs of users, considering that the user may need to automatically add application icons in other areas to the target folder, the target folder may have been displayed in the second position before being displayed in the first position, and the third icon displayed in the second area corresponding to the second position is displayed in the target folder. In this way, when the position of the target folder is changed from the second position to the first position, update of the third icon to the icon displayed in the first area and corresponding to the attribute information of the target folder is automatically triggered.

During the specific implementation, considering that the target folder may occupy multiple desktop icon spaces, for the position change process of the target folder, after receiving the user's input operation on the target folder, the target folder is moved as a whole, for example, the target folder can be long pressed to drag the target folder as a whole. When it is detected that the target folder is dragged to the second position and there is an application icon in the second position, when the desktop interface where the target folder is located includes a preset number of vacant display spaces, the application icon displayed in the second position is squeezed to the remaining display space to reserve a preset number of display spaces for the target folder. The display space on the desktop interface where the target folder is located is less than a preset number, and some or all of the application icons displayed in the second position are squeezed to the next page of the desktop interface.

Considering the diversification of the display styles of the target folder, the desktop icon space occupied by the target folder is directly related to its size parameter. Based on this, for the process of determining the display position of the target folder, before displaying the target folder in the first position in response to the first input in the above S104, the method also includes:
obtaining a first size parameter of the target folder; where the first size parameter is determined by the style of the target folder, and the first size parameter includes length and width. For example, the style of the target folder is 2x3. Correspondingly, the length of the target folder is determined by the display area of three adjacent desktop icons arranged horizontally, and the width of the target folder is determined by the display area of two adjacent desktop icons arranged vertically. For another example, the style of the target folder is 1x4. Correspondingly, the length of the target folder is determined by the display area of four adjacent desktop icons arranged horizontally, and the width of the target folder is determined by the display area of one desktop icon.

Correspondingly, after receiving the first input by the user in the above S102, before displaying the target folder in the first position in response to the first input in the above S104, the method further includes:
obtaining an end position of an input track of the first input, and determining the first position according to the end position of the input track, where the first position is a position close to the end position of the input track and satisfying the first size parameter.

Specifically, the desktop icon display position corresponding to the end position of the input track can be used as the upper left corner area, the upper right corner area, the lower left corner area, or the lower right corner area in the first position, or the like. The specific settings can be set according to actual needs. The embodiment of the present application does not limit this. The first number of horizontally arranged icon spaces contained in the first position (that is, the number of columns of icon spaces) is determined by the length in the first size parameter, and the second number of vertically arranged icon spaces (that is, the number of rows of icon spaces) is determined by the width in the first size parameter, that is, the first position is a display area containing desktop icon spaces, where the number of the desktop icon spaces is the product of rows and columns.

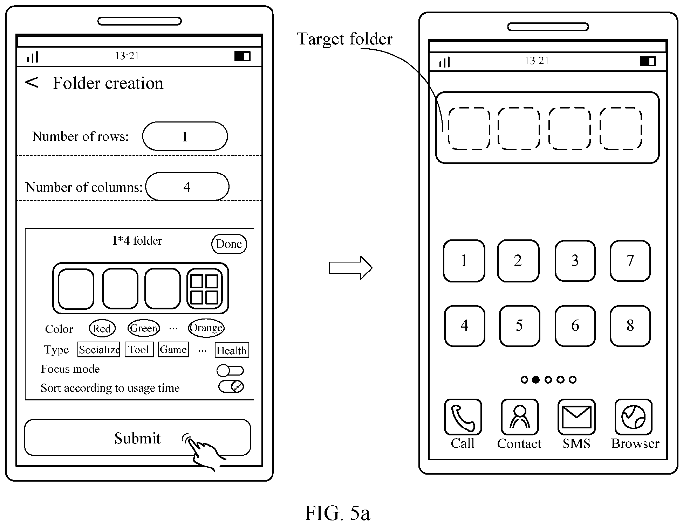

In specific implementation, as shown in FIG. 5a, if the first size parameter of the target folder is that the length is determined by 4 desktop icon display positions, the width is determined by 1 desktop icon display position, and the end position of the input track is taken as the upper left corner area of the first position, the first position is a position where the desktop icon display position corresponding to the end position of the input track is used as the upper left corner area and there are 4 icon spaces arranged horizontally and 1 icon space arranged vertically.

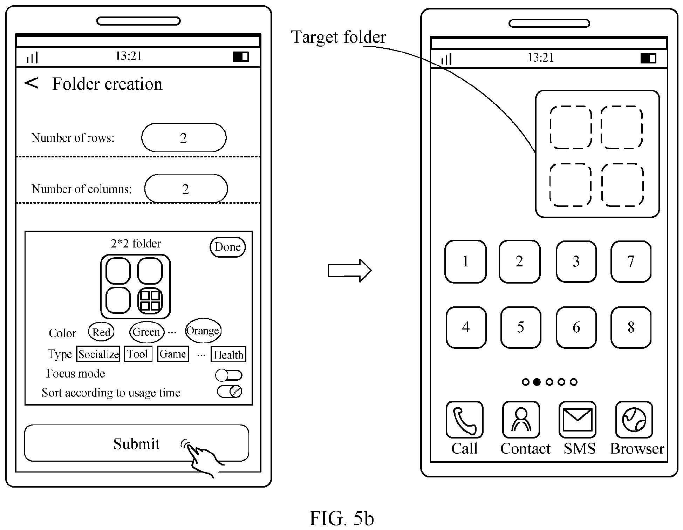

As shown in FIG. 5b, if the first size parameter of the target folder is that the length is determined by 2 desktop icon display positions, the width is determined by 2 desktop icon display positions, and the end position of the input track is taken as the upper left corner area of the first position, the first position is a position where the desktop icon display position corresponding to the end position of the input track is used as the upper left corner area and there are 2 icon spaces arranged horizontally and 2 icon space arranged vertically.

In order to ensure that the application program corresponding to an application icon in the folder can be quickly started, the specified icon in the target folder can be displayed in the form of a single desktop icon, that is, the specified icon can occupy one icon space (that is, the display position of one desktop icon). Based on this, the first icon includes multiple sub-icons. Before the first icon is displayed in the target folder in S104, the method also includes:
obtaining a second size parameter of the target folder; where the second size parameter is smaller than the first size parameter, and the second size parameter is determined by the number of application icons displayed in the form of a single desktop icon.

Correspondingly, the S 104 of displaying the first icon in the target folder specifically includes:
displaying N sub-icons included in the first icon in the target folder in a first size, and displaying sub-icons among the multiple sub-icons included in the first icon other than the N sub-icons in a second size; where the first size can be determined by the size of a display position of a desktop icon;
where N is determined by the second size parameter, in a case that the sub-icon of the first size receives an input, a user interface of an application program corresponding to the sub-icon of the first size is displayed; and in a case that the sub-icon of the second size receives an input, an expansion interface of the target folder is displayed.

Specifically, the second size parameter of the target folder determines the number of application programs that can be directly launched in the target folder. During specific implementation, the user can set the second size parameter (that is, the size of N) according to actual needs, or use the default second size parameter. In order to increase the number of sub-icons displayed in the first size, if the number of desktop icon spaces occupied by the target folder is X (that is, the product of the number of rows and columns of the occupied desktop icon space), it can be set by default that N is equal to X minus 1, that is, one desktop icon space is reserved in the target folder to display sub-icons in thumbnail form other than the N sub-icons. Correspondingly, if the total number of multiple sub-icons included in the first icon is Y and Y is greater than or equal to X, N sub-icons are displayed in the first size, and Y-N sub-icons are displayed in the second size. For example, still taking the display form of icons in the target folder shown in FIG. 5a and FIG. 5b as an example, where N=4-1=3, the first icon includes five sub-icons of icon 1, icon 2, icon 3, icon 4 and icon 5. Icon 1, icon 2 and icon 3 are displayed in the target folder in the first size, and icon 4 and icon 5 are displayed in the second size.

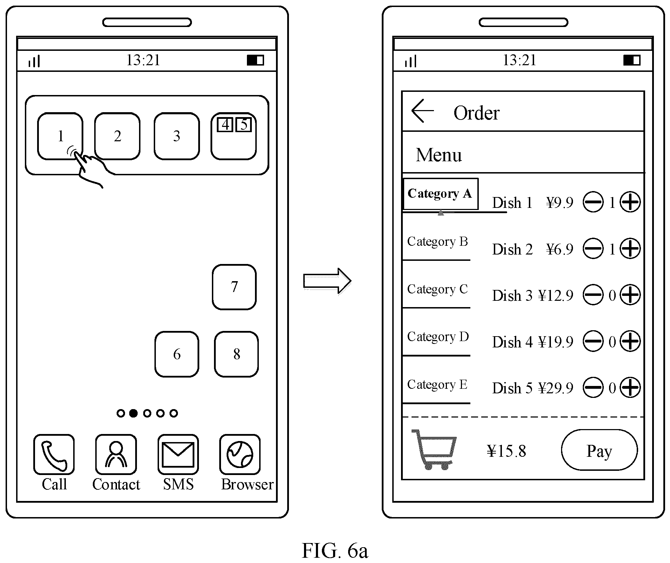

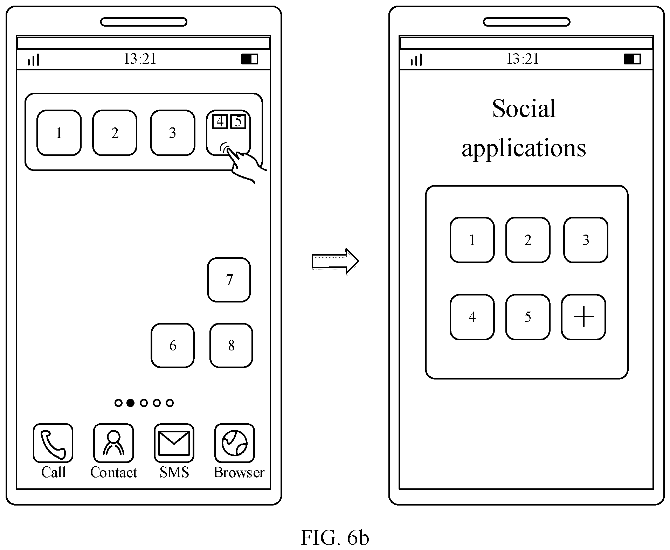

Taking the icon display form in the target folder shown in FIG. 5a as an example, as shown in FIG. 6a, when icon 1 receives an input, the user interface of the application program corresponding to icon 1 is displayed, that is, after receiving the user input on icon 1, the corresponding application 1 can be started, thereby quickly entering the user interface of the application 1 that the user needs to use. Correspondingly, as shown in FIG. 6b, when icon 4 and icon 5 in the thumbnail receives an input, the expansion interface of the target folder is displayed. Considering that icon 4 and icon 5 are displayed in thumbnail in a desktop icon display position in the sub-folder, that is, after receiving the user input on the subfolder containing icon 4 and icon 5, the expansion interface including at least icon 4 and icon 5 is opened (the display interface can only display icon 4 and icon 5, or can display icons 1 to 5 at the same time). This allows the user to select a target application that needs to be used, and when receiving the user input for an icon corresponding to the target application, the user interface of the target application is displayed.

In addition, it should be noted that the sub-folder containing multiple sub-icons displayed in the second size can be located in the first display position in the target folder, or in the last display position in the target folder, or in a certain middle display position in the target folder, which is not limited in the embodiment of this application. During specific implementation, the user can set it according to usage habits.

Further, when N sub-icons are displayed in the first size in the target folder, the N sub-icons can be sorted according to the preset sorting method, and the N sub-icons are displayed in order in the target folder, so that the user can quickly view the application to be used, and the user interface of the application program corresponding to any one of the N sub-icons can be quickly entered. Specifically, when the probability of each application being triggered is determined based on the user's usage record of the associated application, to sort the application icons, when the first application is an associated application of the second application, if detecting that the user uses the first application and the icon corresponding to the second application is displayed in the second size in the target folder, the probability of the second application being triggered is automatically set to the highest, that is, the icon corresponding to the second application is displayed in the first size in the first icon display position in the target folder, that is, displaying the icon corresponding to the second application in the second size in the target folder automatically changes to displaying the icon corresponding to the second application in the first size. In this case, the displaying the icon corresponding to the second application in thumbnail automatically changes to displaying in the form of a single icon, which helps the user quickly launch the application program that needs to be used.

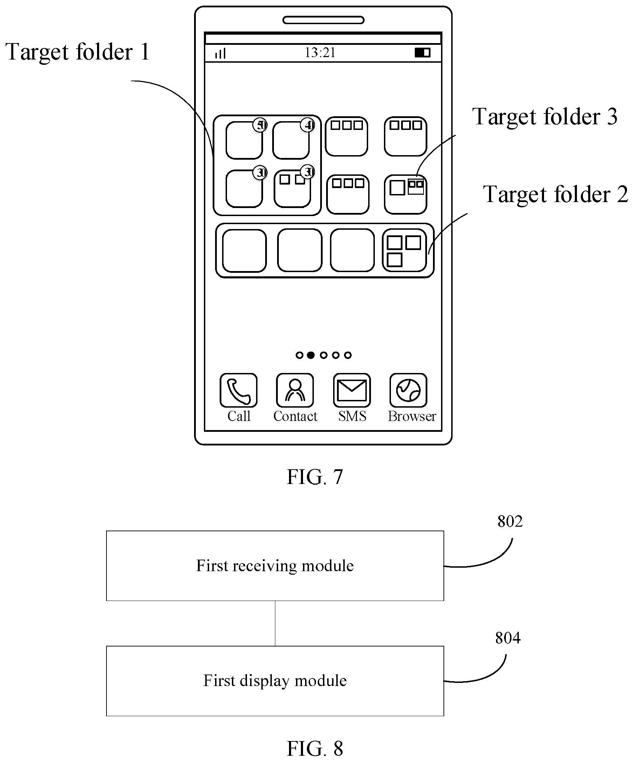

In specific implementation, as shown in FIG. 7, multiple styles of target folders can be displayed in the desktop interface, where each target folder includes application icon according to the specific embodiment provided in the above application icon display method. For example, target folder 1 is a folder with a style of 2×2, target folder 2 is a folder with a style of 1×4, and target folder 3 is a folder with a style of 1×1. Besides, the icon in the folder in 1× 1 style can also be displayed in different sizes, which can also increase the size of application icons displayed as separate icons, making it easier for users to quickly identify which icons are in the folder. For applications that need to display application subscript, the subscripts of N sub-icons displayed in the first size can be displayed directly in the upper right corner of the icon. Correspondingly, the sum of subscripts of Y-N sub-icons displayed in the second size are displayed in the upper right corner of the sub-folder in the target folder. Specifically, for the sub-icon displayed in the first size in the target folder, when the sub-icon of the first size receives an input, the user interface of the application program corresponding to the sub-icon in the first size is displayed, so as to quickly launch the applications that the user needs to use.

In the application icon display method provided by the embodiments of the present application, the first input by the user is received; in response to the first input, a target folder is displayed in a first position, the display of a first icon displayed in a first area is canceled, and the first icon is displayed in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

It should be noted that the application icon display method provided in the embodiment of the present application may be executed by an application icon display apparatus, or a control module in the application icon display apparatus for executing the application icon display method. In the embodiment of the present application, the application icon display apparatus performing the application icon display method is taken as an example to illustrate the application icon display apparatus provided by the embodiment of the present application.

Specifically, corresponding to the above application icon display method, as shown in FIG. 8, the application icon display apparatus provided by the embodiment of the present application includes:
a first receiving module 802, configured to receive a first input by a user; and
a first display module 804, configured to: in response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area.

In the embodiment provided by this application, the first receiving module is configured to receive the first input by the user; the first display module is configured to: in response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

Optionally, the apparatus also includes:
a second receiving module, configured to receive a second input for the target folder after displaying the first icon in the target folder; and
a second display module, configured to: in response to the second input, change the attribute of the target folder to a second attribute, cancel the display of the second icon displayed in the first area, and update the first icon displayed in the target folder to the second icon; where the second icon includes an icon corresponding to the second attribute among icons displayed in the first area.

Optionally, the apparatus also includes:
a third display module, configured to display the target folder in a second position before receiving the first input by the user, where the target folder includes a third icon; and
an icon processing module, configured to cancel display of the third icon after the response to the first input.

Optionally, the apparatus also includes:
a first obtaining module, configured to obtain a first size parameter of the target folder before displaying the target folder in the first position; and
a position determination module, configured to obtain an end position of an input track of the first input after receiving the first input by the user and before displaying the target folder in the first position, and determine the first position according to the end position, where the first position is a position close to the end position and satisfying the first size parameter.

Optionally, the first icon includes multiple sub-icons, and the apparatus further includes:
a second obtaining module, configured to obtain a second size parameter of the target folder before displaying the first icon in the target folder; and
the first display module is specifically configured to display N sub-icons in a first size in the target folder, and display sub-icons among the multiple sub-icons other than the N sub-icons in a second size;
where N is determined by the second size parameter, in a case that the sub-icon of the first size receives an input, a user interface of an application program corresponding to the sub-icon of the first size is displayed; and in a case that the sub-icon of the second size receives an input, an expansion interface of the target folder is displayed.

In the application icon display apparatus provided by the embodiment of the present application, the first receiving module is configured to receive the first input by the user; the first display module is configured to: in response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

The application icon display apparatus in the embodiments of the present application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine or a self-service machine. This is not specifically limited in the embodiments of the present application.

The application icon display apparatus in the embodiment of the present application may be a device with an operating system. The operating system may be an Android (Android) operating system, an iOS operating system, or another possible operating system. This is not specifically limited in this embodiment of this application.

The application icon display apparatus provided in this embodiment of the present application can implement processes in the method embodiments of FIG. 1. To avoid repetition. details are not described herein again.

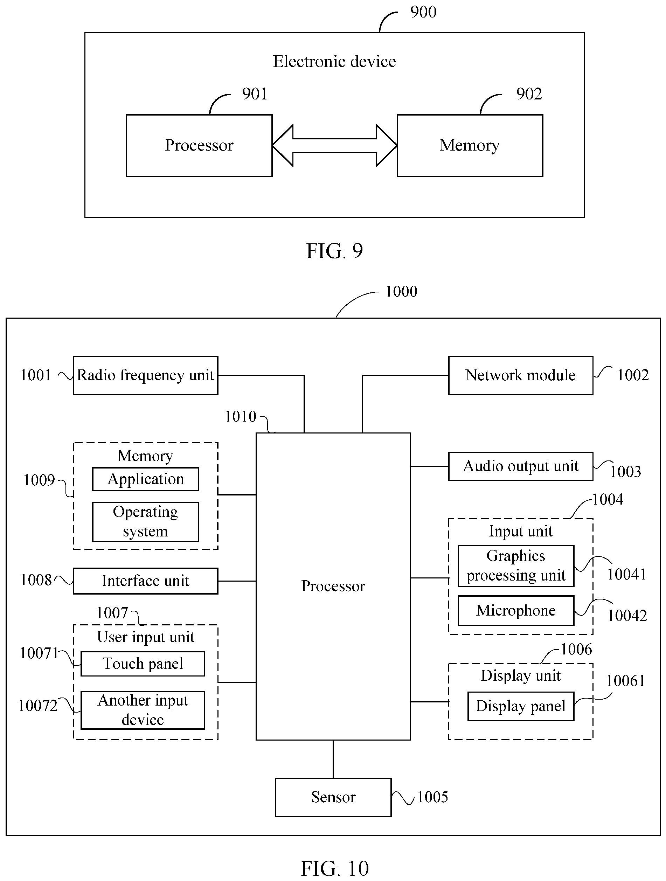

Optionally, as shown in FIG. 9, the embodiments of the present application further provide an electronic device 900, including a processor 901, a memory 902, and a program or instruction stored in the memory 902 and executable on the processor 901, When the program or instruction is executed by the processor 901, each process of the application icon display method embodiment described above can be realized, and the same technical effect can be achieved. To avoid repetition, details are not repeated herein.

It should be noted that the electronic device in this embodiment of this application includes the foregoing mobile electronic device and the foregoing non-mobile electronic device.

FIG. 10 is a schematic diagram of a hardware structure of an electronic device according to an embodiment of this application.

An electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 10 does not constitute a limitation on the electronic device. The electronic device may include components more or fewer than those shown in the diagram, a combination of some components, or different component arrangements. Details are not described herein.

The processor 1010 is configured to receive a first input by a user; and in response to the first input, display a target folder in a first position, cancel the display of a first icon displayed in a first area, and display the first icon in the target folder; where the target folder has a first attribute, the first area is determined by the first position, and the first icon includes an icon corresponding to the first attribute among icons displayed in the first area.

Optionally, the processor 1010 is also configured to receive a second input for the target folder after the first icon is displayed in the target folder; and in response to the second input, change the attribute of the target folder to a second attribute, cancel the display of the second icon displayed in the first area, and update the first icon displayed in the target folder to the second icon; where the second icon includes an icon corresponding to the second attribute among icons displayed in the first area.

Optionally, the processor 1010 is further configured to display the target folder in a second position before receiving the first input by the user, where the target folder includes a third icon; and in the response to the first input, cancel display of the third icon.

Optionally, the processor 1010 is also configured to obtain a first size parameter of the target folder before displaying the target folder in the first position; and obtain an end position of an input track of the first input after receiving the first input by the user and before displaying the target folder in the first position, and determine the first position according to the end position, where the first position is a position close to the end position and satisfying the first size parameter.

Optionally, the first icon includes multiple sub-icons, and the processor 1010 is further configured to: obtain a second size parameter of the target folder before displaying the first icon in the target folder; and display N sub-icons in a first size in the target folder, and display sub-icons among the multiple sub-icons other than the N sub-icons in a second size; where N is determined by the second size parameter, in a case that the sub-icon of the first size receives an input, a user interface of an application program corresponding to the sub-icon of the first size is displayed; and in a case that the sub-icon of the second size receives an input, an expansion interface of the target folder is displayed.

In the electronic device provided by the embodiments of the present application, the first input by the user is received; in response to the first input, a target folder is displayed in a first position, the display of a first icon displayed in a first area is canceled, and the first icon is displayed in the target folder; where the target folder has a first attribute, the first area is determined by the first position, and the first icon includes an icon corresponding to the first attribute among icons displayed in the first area. Thus, by setting corresponding attribute information for the target application folder, when the target folder is displayed in the first position, the first icon corresponding to the attribute information displayed in the first area can be automatically added to the target folder, thereby realizing automatic, fast and accurate arrangement of application icons without occupying too much user time.

It should be understood that, in the embodiments of this application, the input unit 1004 may include a graphics processing unit (Graphics Processing Unit, GPU) 10041 and a microphone 10042, and the graphics processing unit 10041 processes image data of a still picture or video obtained by an image capture apparatus (such as a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein. The memory 1009 may be configured to store a software program and various data, including but not limited to an application program and an operating system. An application processor and a modem processor may be integrated into the processor 1010, the application processor mainly processes an operating system, a user interface, an application program, and the like, and the modem processor mainly processes wireless communication. It can be understood that, alternatively, the modem processor may not be integrated into the processor 1010.

An embodiment of the present application further provides a readable storage medium. The readable storage medium stores a program or an instruction, and when the program or the instruction is executed by a processor, the various processes of the foregoing application icon display method embodiment are performed and the same technical effects can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to run programs or instructions to implement each process of the embodiment of the foregoing application icon display method and the same technical effects can be achieved. To avoid repetition, details are not described herein again.

It should be understood that the chip mentioned in this embodiment of this application may also be referred to as a system-level chip, a system chip, a chip system, or an on-chip system chip.

The embodiments of the present application further provide a computer program product, the computer program product includes a processor, a memory, and a program or an instruction stored in the memory and executable on the processor, when the program or the instruction is executed by the processor, each process of the above-mentioned application icon display method embodiment can be realized, and the same technical effect can be achieved. To avoid repetition, details are not repeated herein.

An embodiment of the present application further provides an electronic device. The electronic device is configured to perform each process of the above application icon display method embodiment, and can achieve the same technical effect. To avoid duplication, the details will not be described here.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes multiple instructions for instructing a terminal (which may be a mobile phone, a computer, a server, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An application icon display method, comprising:
receiving a first input by a user; and
in response to the first input, displaying a target folder in a first position, canceling the display of a first icon displayed in a first area, and displaying the first icon in the target folder;
wherein the target folder has a first attribute, the first area is determined by the first position, and the first icon comprises an icon corresponding to the first attribute among icons displayed in the first area.

2. The method according to claim 1, wherein after the first icon is displayed in the target folder, the method further comprises:
receiving a second input for the target folder; and
in response to the second input, changing the attribute of the target folder to a second attribute, canceling the display of the second icon displayed in the first area, and updating the first icon displayed in the target folder to the second icon;
wherein the second icon comprises an icon corresponding to the second attribute among icons displayed in the first area.

3. The method according to claim 1, wherein before the receiving a first input of a user, the method further comprises:
display the target folder in a second position, wherein the target folder comprises a third icon; and
after the response to the first input, the method further comprises:
canceling display of the third icon.

4. The method according to claim 1, wherein before displaying the target folder in the first position, the method further comprises:
obtaining a first size parameter of the target folder; and
after receiving the first input by the user and before displaying the target folder in the first position, the method further comprises:
obtaining an end position of an input track of the first input, and determining the first position according to the end position, wherein the first position is a position close to the end position and satisfying the first size parameter.

5. The method according to claim 1, wherein the first icon comprises multiple sub-icons, and before displaying the first icon in the target folder, the method further comprises:
obtaining a second size parameter of the target folder; and
displaying the first icon in the target folder comprises:
displaying N sub-icons in a first size in the target folder, and displaying sub-icons among the multiple sub-icons other than the N sub-icons in a second size;
wherein N is determined by the second size parameter, in a case that the sub-icon of the first size receives an input, a user interface of an application program corresponding to the sub-icon of the first size is displayed; and in a case that the sub-icon of the second size receives an input, an expansion interface of the target folder is displayed.

6. An application icon display apparatus, comprising:
a first receiving module, configured to receive a first input by a user; and
a first display module, configured to: in response to the first input, display a target folder in a first position, cancel the display of a first icon displayed in a first area, and display the first icon in the target folder; wherein the target folder has a first attribute, the first area is determined by the first position, and the first icon comprises an icon corresponding to the first attribute among icons displayed in the first area.

7. The apparatus according to claim 6, wherein the apparatus further comprises:
a second receiving module, configured to receive a second input for the target folder after displaying the first icon in the target folder; and
a second display module, configured to: in response to the second input, change the attribute of the target folder to a second attribute, cancel the display of the second icon displayed in the first area, and update the first icon displayed in the target folder to the second icon; wherein the second icon comprises an icon corresponding to the second attribute among icons displayed in the first area.

8. The apparatus according to claim 6, wherein the apparatus further comprises:
a third display module, configured to display the target folder in a second position before receiving the first input by the user, wherein the target folder comprises a third icon; and
an icon processing module, configured to cancel display of the third icon after the response to the first input.

9. The apparatus according to claim 6, wherein the apparatus further comprises:
a first obtaining module, configured to obtain a first size parameter of the target folder before displaying the target folder in the first position; and
a position determination module, configured to obtain an end position of an input track of the first input after receiving the first input by the user and before displaying the target folder in the first position, and determine the first position according to the end position, wherein the first position is a position close to the end position and satisfying the first size parameter.

10. The apparatus according to claim 6, wherein the first icon comprises multiple sub-icons, and the apparatus further comprises:
a second obtaining module, configured to obtain a second size parameter of the target folder before displaying the first icon in the target folder; and
the first display module is specifically configured to display N sub-icons in a first size in the target folder, and display sub-icons among the multiple sub-icons other than the N sub-icons in a second size;
wherein N is determined by the second size parameter, in a case that the sub-icon of the first size receives an input, a user interface of an application program corresponding to the sub-icon of the first size is displayed; and in a case that the sub-icon of the second size receives an input, an expansion interface of the target folder is displayed.

11. An electronic device, comprising a processor, a memory, and a program or instruction stored on the memory and executable on the processor, wherein when the program or instruction is executed by the processor, steps of the application icon display method according to any one of claims 1 to 5 are implemented.

12. A readable storage medium, storing a program or an instruction, wherein when the program or instruction is executed by the processor, steps of the application icon display method according to any one of claims 1 to 5 are implemented.

13. A chip, comprising a processor and a communication interface, wherein the communication interface is coupled to the processor, and the processor is configured to run a program or an instruction, so that steps of the application icon display method according to any one of claims 1 to 5 are implemented.

14. A computer program product, wherein the computer program product is stored in a storage medium, and the computer program product is executed by at least one processor to implement the steps of the application icon display method according to any one of claims 1 to 5.

15. An electronic device, configured to perform the steps of the application icon display method according to any one of claims 1 to 5.
